# EUROPÄISCHE PATENTSCHRIFT

(11) **EP 1 387 051 B1**
(45) Veröffentlichungstag und Bekanntmachung des Hinweises auf die Patenterteilung: **19.10.2005**
(21) Anmeldenummer: 03015729.1
(22) Anmeldetag: 10.07.2003
(51) Int. Cl.: F01N 3/023, F01N 9/00, B01D 46/24, F01N 11/00, F02D 41/02

(54) **Aschebeladungsermittlung für Partikelfilter**
Ash amount detection for a particulate filter
Detection du taux de chargement en cendres d'un filtre à particules

(30) Priorität: 31.07.2002 DE 10234791
(43) Veröffentlichungstag der Anmeldung: 04.02.2004
(73) Patentinhaber: DEUTZ Aktiengesellschaft, 51063 Köln (DE)
(72) Erfinder: Miebach, Rolf, 50321 Brühl (DE); Bülte, Heiner, Dr., 40668 Meerbusch (DE); Lingens, Andreas, Dr., 53639 Königswinter (DE)

(56) Entgegenhaltungen:
- EP-A- 1 103 702
- EP-A- 1 229 223
- EP-A- 1 234 959
- DE-A- 10 023 789
- US-A- 5 287 698
- US-A- 5 319 930
- US-B1- 6 405 528

## Beschreibung

Die Erfindung betrifft ein Verfahren zum Betreiben eines Partikelfiltersystems, wobei der Partikelfilter vom Abgas einer selbstzündenden Brennkraftmaschine durchströmt, mit Ruß beladen und in Abhängigkeit von vorgegebenen Rußbeladungszuständen des Partikelfilters regeneriert wird, wobei zusätzlich die Beladung von in dem Partikelfilter abgelagerten nicht regenerierbaren (anorganischen) Bestandteilen des Abgases ermittelt wird.

Ein derartiges Verfahren ist aus der EP 1 234 959 A2 bekannt. In diesem Dokument wird ein kontinuierlich ablaufendes Regenerationsverfahren angegeben, das einen Oxidationskatalysator und einen Partikelfilter aufweist. Zusätzlich zu der Bestimmung der Rußbeladung des Partikelfilters wird die Beladung von nicht regenerierbaren Aschen in dem Partikelfilter bestimmt. Dies erfolgt allgemein über die Bestimmung der Menge des während des Brennkraftmaschinenbetriebs verbrauchten Schmieröls. Aus dieser ermittelten Menge wird dann experimentell oder rechnerisch die Aschemenge hergeleitet.

Der Erfindung liegt die Aufgabe zugrunde, den Betrieb des Partikelfiltersystems weiter zu optimieren.

Diese Aufgabe wird mit den Merkmalen des Patentanspruchs 1 gelöst. Die nicht regenerierbaren Bestandteile sind zunächst einmal anorganische Stoffe in Form von Aschen (Sulfataschen). Die Aschen verbleiben bei der Regeneration des Partikelfilters in dem Partikelfilter, wobei die Regeneration in Abhängigkeit von der Rußbeladung diskontinuierlich oder unabhängig von der Rußbeladung kontinuierlich und im Übrigen katalytisch oder thermisch unterstützt erfolgen kann, und führen zu einer zunehmenden Verringerung der nutzbaren Filterfläche bis hin zum Verblocken. Dieser Vorgang der Ablagerung von Aschen in dem Partikelfilter erfolgt zwar erheblich langsamer als die Beladung mit Ruß, führt aber ab vorgegebenen beziehungsweise vorgebbaren Grenzwerten zu einer nicht mehr zufriedenstellenden Funktion des Partikelfilters (beispielsweise wird der Abgasgegendruck zu hoch). Durch das erfindungsgemäße Verfahren wird dieser Zustand vermieden, indem nunmehr in Abhängigkeit von ermittelten Aschebeladungszuständen der Partikelfilter gewartet oder gewechselt wird. Zudem muss für eine zuverlässige und genaue Ermittlung der Rußbeladung aus dem Abgasgegendruck die Aschebeladung bekannt sein.

Dabei wird die Beladung mit anorganischen Bestandteilen über eine Auswertung von Kenngrößen des Schmieröls der Brennkraftmaschine ermittelt. Soll die Rußbeladung des Partikelfilters aus dem Abgasgegendruck ermittelt werden, ist die Kenntnis des Grades der Aschebeladung für eine exakte Bestimmung der tatsächlichen Rußbeladung wichtig beziehungsweise notwendig. Bei heutigen Brennkraftmaschinen und Betriebsstoffen bestehen die anorganischen Bestandteile zu deutlich über 90 % aus Aschen, die dem Schmieröl der Brennkraftmaschine entstammen. Der Zeitpunkt einer notwendigen Wartung bzw. Reinigung des Partikelfilters hängt somit entscheidend von dem Zustand des Schmieröls bzw. von der Menge des Schmieröls ab, das in das Abgas der Brennkraftmaschine gelangt. Daher ist über den Schmierölverbrauch der Brennkraftmaschine eine Ermittlung der Beladung des Partikelfilters mit anorganischen Bestandteilen möglich. Hierzu wird eine Ölstandsmessung beispielsweise über einen Öllevelsensor durchgeführt und Ölnachfüllungen zwischen vollständigen Motorölwechseln werden durch eine geeignete Auswertstrategie des Öllevelsignals erkannt. Entsprechend wird die Mengenbilanz korrigiert. Bei Brennkraftmaschinen mit offener Kurbelgehäuseentlüftung wird die Ölmengenbilanz durch einen diesen Ölverlustweg erfassenden, geeigneten empirischen Ansatz korrigiert.

Die Beladung mit anorganischen Bestandteilen wird alternativ oder in Ergänzung zu der Schmierölauswertung über eine Auswertung der aufsummierten verschiedenen Betriebszustände und Betriebsdauern der Brennkraftmaschine ermittelt. Grundlage für ein derartiges Verfahren ist der vorher beispielsweise im Versuch bestimmte Ascheeintrag in das Abgas der Brennkraftmaschine bei den jeweiligen Randbedingungen (im Normalfall der aus den Betriebszuständen ermittelte Ölverbrauch).

Grundsätzlich geht es erfindungsgemäß um die Ermittlung eines Schätzwertes für die Aschebeladung eines Partikelfilters. Dieser Wert ist dem aufsummierten Ölverbrauch der Brennkraftmaschine und dem Sulfataschekennwert des verwendeten Schmieröls in etwa proportional. Der Sulfataschekennwert kann geschätzt oder (bei Werkstattwartung) abhängig von der verwendeten Ölsorte direkt in das Steuergerät der Brennkraftmaschine eingeben werden. Der Ölverbrauch der Brennkraftmaschine kann mit entsprechender Sensorik an Bord des Fahrzeugs gemessen werden. Der Ölverbrauch der Brennkraftmaschine kann alternativ durch Auswertung der tatsächlichen Betriebszustände der Brennkraftmaschine unter Berücksichtigung ihres Alterungszustands abgeschätzt werden. Der Ölverbrauch der Brennkraftmaschine kann vereinfacht aus dem aufsummierten Kraftstoffverbrauch und dem Alterungszustand der Brennkraftmaschine abgeschätzt werden. Die benötigten Kenngrößen (detaillierter Betriebszustand mit allen motorspezifischen, einsatzspezifischen und umgebungsspezifischen Kenngrößen und allen Daten über die Gesamtbetriebsdauer und den Wartungszustand der Brennkraftmaschine) liegen im Steuergerät der Brennkraftmaschine vor. Der Schätzwert für die Aschebeladung wird im Steuergerät der Brennkraftmaschine ermittelt und weiteren Funktionsblöcken des Steuergeräts als Input zur Verfügung gestellt.

Wichtig ist nicht nur, dass auf diese Weise eine Überbeladung des Partikelfilters und daraus resultierenden zu hohen Abgasgegendruck vermieden wird (der Abgasgegendruck könnte auch direkt gemessen werden), sondern dass der ermittelte Schätzwert für die Aschebeladung zur korrekten Modellierung des Partikelfiltersystems verwendet wird, um zum Beispiel aus dem gemessenen Abgasgegendruck auf eine bestimmte Rußbeladung des Partikelfilters schließen zu können oder um zu entscheiden, ob ein weiteres Wartungsintervall der Brennkraftmaschine abgewartet werden kann, ehe eine Aschereinigung des Partikelfilters vorgenommen werden muss.

In Weiterbildung der Erfindung wird nach Erreichen einer vorgebbaren Beladung mit anorganischen Bestandteilen eine Wartung in Form einer mechanischen Reinigung des Partikelfilters durchgeführt. Diese Reinigung erfolgt insbesondere durch ein Auswaschen des Filtermaterials mit einer Flüssigkeit, beispielsweise Wasser, wobei der Flüssigkeit geeignete Reinigungsmittel oder Lösungsmittel zugesetzt werden können. Diese Reinigung erfolgt bevorzugt im Rahmen eines Werkstattaufenthalts, wobei hierzu der Partikelfilter aus dem Abgasstrang der Brennkraftmaschine entnommen wird und in eine werkstattmäßig vorhandene Reinigungsanlage eingesetzt werden kann. Dabei kann das Steuergerät für die Reinigungsanlage mit dem brennkraftmaschinenseitigen Steuergerät für die Ermittlung der Beladung kommunizieren, sodass die ermittelten und gespeicherten Daten aus dem brennkraftmaschinenseitigen Steuergerät auf das Reinigungssteuergerät übertragen und ausgewertet werden können und umgekehrt nach der Reinigung eine entsprechende Information an das brennkraftmaschinenseitige Steuergerät übermittelt werden kann. Dieses brennkraftmaschinenseitige Steuergerät ist bevorzugt ein Multifunktionsgerät, das sowohl die Steuerung und Regelung der Brennkraftmaschine insbesondere auch die Kraftstoffeinspritzung, als auch die Steuerung des Partikelfiltersystems vornimmt.

## Patentansprüche

1. Verfahren zum Betreiben eines Partikelfiltersystems, wobei der Partikelfilter vom Abgas einer selbstzündenden Brennkraftmaschine durchströmt, mit Ruß beladen und in Abhängigkeit von vorgegebenen Rußbeladungszuständen des Partikelfilters regeneriert wird, wobei zusätzlich die Beladung von in dem Partikelfilter abgelagerten nicht regenerierbaren anorganischen Bestandteilen des Abgases ermittelt wird,
**dadurch gekennzeichnet, dass** die Beladung mit anorganischen Bestandteilen über eine Auswertung von Kenngrößen des Schmieröls der Brennkraftmaschine in der Form ermittelt wird, dass eine Ölstandsmessung über einen Öllevelsensor durchgeführt und Ölnachfüllungen zwischen vollständigen Motorölwechseln durch eine geeignete Auswertstrategie des Öllevelsignals erkannt werden.

2. Verfahren nach Anspruch 1,
**dadurch gekennzeichnet, dass** die Beladung mit anorganischen Bestandteilen über den Schmierölverbrauch der Brennkraftmaschine bestimmt wird.

3. Verfahren nach einem der vorherigen Ansprüche,
**dadurch gekennzeichnet, dass** nach Erreichen einer vorgebbaren Beladung mit anorganischen Bestandteilen eine mechanische Reinigung des Partikelfilters durchgeführt wird.

4. Verfahren nach einem der vorherigen Ansprüche,
**dadurch gekennzeichnet, dass** das Partikelfilter durch Durchströmen von zumindest einer Flüssigkeit gereinigt wird.

## Claims

1. Method for operating a particulate filter system, in which the exhaust gas from a compression-ignition internal combustion engine flows through the particulate filter, the particulate filter is laden with particulates and is regenerated as a function of predetermined particulate loading states of the particulate filter, with the loading level of inorganic constituents of the exhaust gas which cannot be regenerated and have been deposited in the particulate filter additionally being determined, **characterized in that** the loading with inorganic constituents is determined by evaluation of characteristic variables of the lubricating oil of the internal combustion engine in such a way that an oil level measurement is carried out by an oil level sensor, and topping-up of the oil between complete engine oil changes is recognized by a suitable evaluation strategy for the oil level signal.

2. Method according to Claim 1, **characterized in that** the loading with inorganic constituents is determined on the basis of the lubricating oil consumption of the internal combustion engine.

3. Method according to one of the preceding claims, **characterized in that** mechanical cleaning of the particulate filter is carried out after a predeterminable loading with inorganic constituents has been reached.

4. Method according to one of the preceding claims, **characterized in that** the particulate filter is cleaned by at least one liquid flowing through it.

## Revendications

1. Procédé d'utilisation d'un système de filtre à particules dans lequel le filtre à particules est traversé par les gaz d'échappement d'un moteur à combustion interne à auto-allumage, se charge en suie et est régénéré en fonction de conditions prédéterminées de charge en suie du filtre à particules et dans lequel la charge des gaz d'échappement en composants minéraux non régénérables déposés sur le filtre à particules est de plus déterminée, **caractérisé en ce que** la charge en composants minéraux est déterminée par évaluation de grandeurs caractéristiques de l'huile de lubrification du moteur à combustion interne en réalisant une mesure du niveau d'huile à l'aide d'une sonde de niveau d'huile et en détectant les appoints d'huile entre des vidanges complètes de l'huile du moteur par une stratégie appropriée d'évaluation du signal de niveau d'huile.

2. Procédé selon la revendication 1, **caractérisé en ce que** la charge en composants minéraux est déterminée à partir de la consommation du moteur à combustion interne en huile de lubrification.

3. Procédé selon l'une des revendications précédentes, **caractérisé en ce qu'**après qu'une charge prédéterminée en composants minéraux a été atteinte, on réalise un nettoyage mécanique du filtre à particules.

4. Procédé selon l'une des revendications précédentes, **caractérisé en ce que** le filtre à particules est nettoyé en étant traversé par au moins un liquide.
